# EUROPÄISCHE PATENTSCHRIFT

(11) **EP 0 726 305 B1**
(45) Veröffentlichungstag und Bekanntmachung des Hinweises auf die Patenterteilung: **03.11.1999**
(21) Anmeldenummer: 95120214.2
(22) Anmeldetag: 20.12.1995
(51) Int. Cl.: C09K 17/40

(54) **Verfahren zur Herstellung von gasdurchlässigen, flüssigkeitsaufnehmenden und -speichernden Agglomeraten**
Process for preparing gas-permeable, liquid absorbing and retaining agglomerates
Procédé de préparation d'agglomérés perméables aux gaz absorbants et rélenteurs de liquide

(30) Priorität: 11.02.1995 DE 19504529
(43) Veröffentlichungstag der Anmeldung: 14.08.1996
(73) Patentinhaber: Degussa-Hüls Aktiengesellschaft, 60287 Frankfurt am Main (DE)
(72) Erfinder: Schlüter, Bernd, D-45721 Haltern (DE)

(56) Entgegenhaltungen:
- EP-A- 0 072 213
- EP-A- 0 475 433
- EP-A- 0 495 108
- EP-A- 0 596 217
- US-A- 5 120 344

## Beschreibung

Die Erfindung betrifft ein verbessertes Verfahren zur Herstellung von gasdurchlässigen, flüssigkeitsaufnehmenden und -speichernden Agglomeraten.

Die Agglomerate, im wesentlichen enthaltend mineralisches Trägermaterial (A), flüssigkeitaufnehmendes und -speicherndes wasserunlösliches Polymerisat (B) (Superabsorber [SAP]), Klebemittel (C) und gegebenenfalls weitere Zusatz- und Hilfsstoffe, und ihre Verwendung sind prinzipiell aus der EP 0 596 217 bekannt. In dem dort offenbarten Verfahren werden diese in einem Arbeitsschritt angefertigt, d. h. alle beteiligten Komponenten werden nacheinander in einem Schaufeltrockner miteinander vermischt. Bei der Bewertung der Endmischung mittels der Lichtmikroskopie zeigt sich, daß zwar prinzipiell eine Anklebung der Polymerisat-Teilchen an das Trägermaterial (Blähton) möglich ist, jedoch die Verteilung der Polymerisat-Teilchen in der Gesamtmischung nur sehr inhomogen ist. Zudem werden durch den gewählten Mischer bei längeren Mischzeiten die Blähton-Teilchen zerschlagen und die angeklebten Polymerisat-Teilchen wieder abgerieben. Des weiteren stellt sich heraus, daß der Kleber in der Mischung überwiegend die Oberflächen des Trägermaterials versiegelt und die natürliche Wasser- und Luftaufnahmefähigkeit unzulässig stark herabsetzt. Außerdem werden die Teilchen miteinander verklebt, und das Endprodukt ist nicht mehr vollständig rieselfähig.

Aufgabe der vorliegenden Erfindung war es, die genannten Nachteile des Standes der Technik zu überwinden.

Die Aufgabe wird durch das Verfahren gemäß Patentanspruch 1 gelöst.

Gegenstand der vorliegenden Erfindung ist demnach ein Verfahren zur Herstellung von gasdurchlässigen, flüssigkeitsaufnehmenden und -speichernden Agglomeraten im wesentlichen enthaltend
A) 100 Gew.-Teile mineralisches Trägermaterial,
B) 0,05 bis 35 Gew.-Teile flüssigkeitaufnehmendes und -speicherndes wasserunlösliches Polymerisat und
C) 0,1 bis 7,5 Gew.-Teile Klebemittel,
   I. wobei in einem ersten Arbeitsschritt aus einer Teilmenge der Komponente A und der Gesamtmenge der Komponenten B und C ein Konzentrat in einem Mischaggregat hergestellt wird, und
   II. nach dem Abbinden des Klebemittels in einem zweiten Arbeitsschritt in einem Mischaggregat das Konzentrat mit der restlichen Menge der Komponente A vermischt wird.

Diese Verfahrensweise bietet viele anwendungs- und verfahrenstechnische Vorteile:
- Die quantitative Zusammensetzung der Konzentratmischung kann so eingestellt werden, daß die Trägerteilchen vollständig mit Polymerisat-Teilchen "ummantelt" sind und somit der gesamte Kleber genutzt wird und eine Verklebung der Trägerteilchen untereinander verringert wird.
- Der Kleber benetzt nur die im Konzentrat befindlichen Trägerteilchen. Die Reduktion der natürlichen Wasseraufnahme der Trägerteilchen in der Gesamtmischung wird damit minimiert und quantifizierbar.
- Die Abmischung des Konzentrats mit unbehandeltem Trägermaterial kann leicht variiert und speziellen Bedürfnissen, z. B. einem erhöhten Wasserbedarf, angepaßt werden.
- Es ist vorstellbar, das Konzentrat nur auf der Basis eines Trägermaterials herzustellen und mit verschiedenen anderen Trägermaterialen abzumischen. Damit könnte zum einen leichter der Vielzahl von möglichen Trägermaterialien entsprochen werden und zum anderen z. B. der Forderung zur Verringerung der Schüttdichten (begrenzte Dachlasten) einzelner Trägermaterialien (z. B. Ziegelbruch) durch Zugabe von leichtem Schaumglas als Konzentrat realisiert werden.

Als mineralisches Trägermaterial, Komponente A, eignen sich z. B. Blähton, Schiefer, Quarz, Bentonit, Lava, Leichtbeton, Perlite, Bims, recycelte Ziegeltonprodukte (z. B. Dachziegel), Schaumglas oder Schlacke sowie künstlich hergestellte Granulate mit einem Teilchendurchmesser von 1 bis 16 mm.

Bevorzugt wird ein gebrochener Blähton (z. B. LECADAN®, Fa. Leca, Pinneberg, Deutschland) als Trägermaterial eingesetzt, da dieser besonders gut in der Lage ist, die ggf. mitverwendeten Zusatz- und Hilfsstoffe zu speichern. So kann das mineralische Trägermaterial mittels einer Nährlösung unter anderem mit Bakterien, Mykorrhiza-Pilzen, Fungiziden, Herbiziden, Pestiziden, Pilzkulturen und anderen Zusatzstoffen, wie z. B. natürlichen und künstlichen Düngemitteln sowie Nährstoffen und Substanzen zum Einstellen des pH-Wertes angereichert werden.

Bevorzugt wird außerdem für besonders leichte Agglomerate Schaumglas (z. B. PORAVER® der Fa. Dennert PORAVER GmbH, Schlüsselfeld, Deutschland) allein oder in Mischungen mit dem obengenannten bevorzugten Blähton.

Als flüssigkeitsaufnehmendes und -speicherndes wasserunlösliches Polymerisat, Komponente B, sind die sogenannten synthetischen Superabsorber (SAP) generell geeignet, wie z. B. Poly(meth)acrylsäure, Poly(meth)acrylsäureamid, Acrylsäureamid-Acrylsäure-Copolymere.

Ebenso lassen sich offenporige Schaumstoffe aus verschiedenen Materialien wie Polyurethan, Polypropylen, PVC, Polyethylen, Polystyrol, Kautschuk oder Latex verwenden.

Bevorzugt eingesetzt werden jedoch Acrylsäure-Acrylsäureamid-Copolymerisate (z. B. STOCKOSORB®, Fa. Stockhausen, Krefeld, Deutschland). Der Korndurchmesser des auf dem mineralischen Trägermaterial fixierten Superabsorbers liegt im Bereich von 0,2 bis 1,0 mm (Mittelkorn). Diese Korngrößen werden besonders bevorzugt, da nach Wasseraufnahme eine bestimmte kritische Größe der Teilchen existieren muß, die es den Pflanzenwurzeln ermöglicht, in diese zum Zwecke der Wasseraufnahme einzudringen. Je nach Anwendungszweck können jedoch auch kleinere Korndurchmesser vorliegen (Feinkorn < 0,2 mm).

Außerdem wird insbesondere offenporiger PUR-Schaumstoff in geflockter Form (Flockengröße ca. 2 bis 10 mm) als wasserspeichernde Komponente verwendet. Dieser Schaumstoff kann aus Produktionsabfällen als Recyclingprodukt hergestellt werden.

Die Menge an fixiertem Superabsorber (Trockenzustand) kann anwendungspezifisch über einen Bereich von 0,1 bis 7,5 Gew.-Teile, bezogen auf 100 Gew.-Teile der Komponente A betragen.

Bei Verwendung von Schaumstoffen als Wasserspeicher können die Zugabemengen (Trockenzustand) in einem Bereich von 1 bis 35 Gew.-Teile, bezogen auf 100 Gew.-Teile der Komponente A, liegen.

Als Klebemittel, Komponente C, können allgemein solche Stoffe eingesetzt werden, die beim Klebevorgang die Eigenschaften der Komponenten A und B nicht negativ beeinträchtigen, d. h. die Gasdurchlässigkeit und die poröse Struktur des mineralischen Trägers sowie die Fähigkeit des Superabsorbers, Wasser relativ schnell aufzunehmen und zu speichern, müssen im wesentlichen erhalten bleiben. Dazu zählen alle wasseremulgierbaren Polymere, wie z. B. Polybutadien, Polyacrylate, Copolymere des Styrol etc.

Als besonders vorteilhaftes Klebemittel werden solche auf Basis von bei Raumtemperatur flüssigen Polybutadienölen eingesetzt. Die Herstellung dieser Polybutadienöle ist bekannt.

Vorzugsweise werden niedrigviskose, stereospezifische vornehmlich cis1,4-Polybutadienöle verwendet, deren cis-1,4-Gehalt in einem Bereich von 70 % und höher liegt und die einen 1,2-Vinyl-Gehalt von weniger als 1,5 % aufweisen.

Die mittlere Molmasse der im Sinne der Erfindung geeigneten stereospezifischen niedrigviskosen Polybutadienöle variiert von ca. 1 800 bis 3 000 g/mol und die Viskosität bei 20 °C liegt je nach Molmasse im Bereich von 700 bis 330 mPa s. Die Dichte der verwendeten Polybutadienöle beträgt 0,90 bis 0,92 g/m³.

Das Klebemittel wird in einer Menge von 0,1 bis 7,5 Gew.-Teile bezogen auf 100 Gew.-Teile des mineralischen Trägers A, bevorzugt von 0,1 bis 3 Gew.-Teile, eingesetzt.

Die Polybutadienöle können rein, d. h. mit einem Feststoffgehalt von größer 99 Massen-% oder in wäßriger Emulsion mit einem variablem Feststoffgehalt von 25 bis 50 Massen-% als Klebemittel zur Anwendung kommen.

Die Polybutadienöle können die im Stand der Technik bekannten Verarbeitungs- und Hilfsstoffe enthalten wie z. B. Sikkative, Netzmittel, Entschäumer und Wasser.

Außerdem können die Agglomerate als Zusatz- und Hilfsstoffe Bakterien, Mykorrhiza-Pilze, Fugizide, Herbizide, Pestizide, Pilzkulturen, natürliche und künstliche Düngemittel, Nährstoffe sowie Substanzen zum Einstellen des ph-Werts enthalten.

Die folgenden Beispiele dienen der Erläuterung der Erfindung.

### Beispiele 1 bis 3

Die Herstellung der Konzentrate I wurde in einem Betonmischer durchgeführt. Es wurde jeweils das Trägermaterial (Komponente A) vorgelegt, wobei mindestens das halbe nutzbare Behältervolumen befüllt war. Bei laufendem Mischer wurde der Kleber TERRAVEST® K (Fa. Hüls AG, Marl) aufgegeben und ca. 2 min. gemischt. Danach wurde die Polymerisat-Komponente aufgestreut und etwa weitere 2 min. gemischt. Abschließend wurde die Konzentratmischung zum Abbinden des Klebers ca. 12 Stunden gelagert.

Der zweite Arbeitsschritt wurde ebenfalls im Betonmischer durchgeführt. Dazu wurde Trägermaterial (9 Vol.-Teile der Komponente A) vorgelegt und das Konzentrat I (1 Vol.-Teil) bei laufendem Mischer langsam zugegeben und ca. 3 min. gemischt. Die Kombination Trägermaterial/Konzentrat kann beliebig zusammengestellt werden. Die Endproduktabmischung kann auch am Einsatzort (z. B. Dachbegrünung) in einem Betonmischfahrzeug erfolgen.

Die genannten Mischzeiten gelten nur für den verwendeten Betonmischer. Sie sind nicht kritisch, jedoch sollten die einzelnen Mischvorgänge nach Schritt I und II jeweils in 5 min. abgeschlossen sein. Bei längeren Mischzeiten wird das Trägermaterial unnötig zerkleinert, und die Polymerisat-Teilchen werden wieder abgerieben.

Die verwendeten Komponenten und Mengen in Gew.-Teilen pro 100 Gew.-Teile der Komponente A sind in Tabelle 1 zusammengefaßt.

**Tabelle 1**

| Trägermaterial | Kleber: TERRAVEST® K ¹⁾ | SAP: STOCKOSORB® 400F ²⁾ |
|---|---|---|
| Ziegelbruch | 0,31 | 0,24 |
| gebrochener Blähton: LECADAN® T ³⁾ | 0,59 | 0,45 |
| Schaumglas: PORAVER® ⁴⁾ | 1,18 | 1,18 |

| | | |
|---|---|---|
| 1) Hersteller: Hüls AG, Marl | | |
| 2) Hersteller: Chemische Fabrik Stockhausen GmbH, Krefeld | | |
| 3) Hersteller: Leca Deutschland GmbH, Pinneberg | | |
| 4) Hersteller: Dennert PORAVER GmbH, Schlüsselfeld | | |

## Patentansprüche

1. Verfahren zur Herstellung von gasdurchlässigen, flüssigkeitsaufnehmenden und -speichernden Agglomeraten im wesentlichen enthaltend
A) 100 Gew.-Teile mineralisches Trägermaterial,
B) 0,05 bis 35 Gew.-Teile (Trockenzustand) flüssigkeitaufnehmendes und -speicherndes wasserunlösliches Polymerisat und
C) 0,1 bis 7,5 Gew.-Teile Klebemittel,
dadurch gekennzeichnet, daß
I. in einem ersten Arbeitsschritt aus einer Teilmenge der Komponente A und der Gesamtmenge der Komponenten B und C ein Konzentrat in einem Mischaggregat hergestellt wird, und
II. nach dem Abbinden des Klebemittels in einem zweiten Arbeitsschritt in einem Mischaggregat das Konzentrat mit der restlichen Menge der Komponente A vermischt wird.

2. Verfahren nach Anspruch 1,
dadurch gekennzeichnet,
daß der zweite Arbeitsschritt frühestens nach 10 bis 24 Stunden nach dem ersten Arbeitsschritt erfolgt.

3. Verfahren nach mindestens einem der Ansprüche 1 bis 2,
dadurch gekennzeichnet,
daß das Mischen in Freifallmischern wie Trommelmischer, Tellermischer, Zwangsmischer oder Taumelmischer oder in Schubmischern, erfolgt.

4. Verfahren nach mindestens einem der Ansprüche 1 bis 3,
dadurch gekennzeichnet,
daß das mineralische Trägermaterial A aus Blähton, Schiefer, Quarz, Bentonit, Lava, Leichtbeton, Perlite, Bims, recycelte Ziegeltonprodukte, Schaumglas oder Schlacke sowie anderen künstlich hergestellten Granulaten mit einem Teilchendurchmesser von 1 bis 16 mm besteht.

5. Verfahren nach mindestens einem der Ansprüche 1 bis 4,
dadurch gekennzeichnet,
daß das Polymerisat B Poly(meth)acrylsäure, Poly(meth)acrylsäureamid, Acrylsäure-Acrylsäureamid-Copolymere oder Mischungen derselben enthält.

6. Verfahren nach mindestens einem der Ansprüche 1 bis 5,
dadurch gekennzeichnet,
daß das Polymerisat B Acrylsäure-Acrylsäureamid-Copolymere enthält.

7. Verfahren nach mindestens einem der Ansprüche 1 bis 6,
dadurch gekennzeichnet,
daß das Polymerisat B offenporige Schaumstoffe, ausgewählt aus Polyurethan, Polypropylen, Polyethylen, Polystyrol, Kautschuk oder Latex oder Mischungen derselben, enthält.

8. Verfahren nach Anspruch 7,
dadurch gekennzeichnet,
daß das Polymerisat B PUR-Schaumstoff enthält.

9. Verfahren nach mindestens einem der Ansprüche 1 bis 8,
dadurch gekennzeichnet,
daß das Klebemittel ein stereospezifisches niedrigviskoses Polybutadienöl enthält.

10. Verfahren nach mindestens einem der Ansprüche 1 bis 9,
dadurch gekennzeichnet,
daß die Agglomerate als Zusatz- und Hilfsstoffe Bakterien, Mykorrhiza-Pilze, Fungizide, Herbizide, Pestizide, Pilzkulturen, natürliche und künstliche Düngemittel, Nährstoffe sowie Substanzen zum Einstellen des pH-Werts enthalten.

## Claims

1. A process for producing gas-permeable agglomerates which absorb and store liquid and essentially comprise
A) 100 parts by weight of mineral support material,
B) from 0.05 to 35 parts by weight (when dry) of water-insoluble polymer which absorbs and stores liquid, and
C) from 0.1 to 7.5 parts by weight of binding agent,
characterized in that
I. a concentrate is produced in a first operation in a mixing system from some of component A and all of components B and C, and
II. after the binding agent has set, the concentrate is mixed with the remaining amount of component A in a second operation in a mixing system.

2. A process according to claim 1,
characterized in that
the second operation takes place not earlier than from 10 to 24 hours after the first operation.

3. A process according to at least one of claims 1 to 2,
characterized in that
the mixing takes place in free-falling mixers, such as drum mixers, pan mixers, forced-circulation mixers or tumble mixers or in convective mixers.

4. A process according to at least one of claims 1 to 3,
characterized in that
the mineral support material A is composed of expanded clay, of slate, quartz, bentonite, lava, lightweight concrete, perlites, pummice, recycled brick-clay products, foamed glass or slags, or else of other synthetically produced granules,with a particle diameter of from 1 to 16 mm.

5. A process according to at least one of claims 1 to 4,
characterized in that
the polymer B comprises poly(meth)acrylic acid, poly(meth)acrylamide, acrylic acid-acrylamide copolymers or mixtures of the same.

6. A process according to at least one of claims 1 to 5,
characterized in that
the polymer B comprises acrylic acid-acrylamide copolymers.

7. A process according to at least one of claims 1 to 6,
characterized in that
the polymer B comprises open-pored foams selected from the class consisting of polyurethane, polypropylene, polyethylene, polystyrene, rubber and latex, and mixtures of the same.

8. A process according to claim 7,
characterized in that
the polymer B comprises PU foam.

9. A process according to at least one of claims 1 to 8,
characterized in that
the binding agent comprises a stereospecific low-viscosity polybutadiene oil.

10. A process according to at least one of claims 1 to 9,
characterized in that
the agglomerates comprise, as additives or auxiliaries, bacteria, mycorrhiza moulds, fungicides, herbicides, pesticides, mould cultures, natural or synthetic fertilizers, nutrients or else substances for adjusting pH.

## Revendications

1. Procédé de préparation d'agglomérats perméables aux gaz, absorbant et accumulant les liquides, contenant essentiellement :
A) 100 parties en poids de matériau de support minéral,
B) de 0,05 à 35 parties en poids (à l'état sec) de polymérisat insoluble dans l'eau absorbant et accumulant les liquides et,
C) de 0,1 à 7,5 parties en poids d'agent adhésif,
caractérisé en ce que
• dans une première étape de travail, un concentrat est préparé à partir d'une quantité partielle du composant A et de la quantité totale des composants B et C, en un agrégat mixte et,
• après la prise de l'agent adhésif, dans une deuxième étape de travail, on mélange le concentrat dans un agrégat mixte avec la quantité restante de composant A.

2. Procédé selon la revendication 1,
caractérisé en ce que
la deuxième étape de travail s'effectue au plus tôt 10 à 24 heures après la première étape de travail.

3. Procédé selon au moins l'une des revendications 1 à 2,
caractérisé en ce que
le mélange s'effectue dans des mélangeurs en chute libre comme des mélangeurs à tambour, des mélangeurs à plateaux, des mélangeurs à mélange forcé, des mélangeure à culbutage ou dans des mélangeurs à cisaillement.

4. Procédé selon au moins l'une des revendications 1 à 3,
caractérisé en ce que
le matériau support minéral A consiste en de l'argile expansée, du schiste, du quartz, de la bentonite, de la lave, du béton léger, de la perlite, de la pierre ponce, des produits de terre argileuse recyclés, du verre cellulaire, ou des scories ainsi que d'autres granulés produits artificiellement, ayant un diamètre de particules allant de 1 à 16 mm.

5. Procédé selon au moins l'une des revendications 1 à 4,
caractérisé en ce que
le polymérisat B contient de l'acide poly(méth)acrylique, de la poly(méth)acrylamide, des copolymères d'acide accylique-acrylamide ou des mélanges de ceux-ci;

6. Procédé selon au moins l'une des revendications 1 à 5,
caractérisé en ce que
le polymérisat B renferme des copolymères d'acide acrylique/acrylamide.

7. Procédé selon au moins l'une des revendications 1 à 6,
caractérisé en ce que
le polymérisat B renferme des produits alvéolaires à pores ouverts, choisis parmi le polyuréthane, le polypropylène, le polyéthylène, le polystyrène, le caoutchouc ou le latex, ou des mélanges de ceux-ci.

8. Procédé selon la revendication 7,
caractérisé en ce que
le polymérisat B renferme des produits alvéolaires en PUR.

9. Procédé selon au moins l'une des revendications 1 à 8,
caractérisé en ce que
l'agent additif renferme un polybutadiène stéréospécifique à faible viscosité.

10. Procédé selon au moins l'une des revendications 1 à 9,
caractérisé en ce que
les agglomérats renferment en tant qu'additifs et adjuvants, des bactéries, des champignons du type mycorrhiza, des fongicides, des herbicides, des pesticides, des cultures de champignon, des engrais naturels et artificiels, des substances alimentaires ainsi que des substances pour le réglage du pH.
